# EUROPÄISCHE PATENTANMELDUNG

(11) **EP 1 748 258 A2**
(43) Veröffentlichungstag der Anmeldung: **31.01.2007**
(21) Anmeldenummer: 06006641.2
(22) Anmeldetag: 30.03.2006
(51) Int. Cl.: F24D 19/10

(54) **Thermische Solaranlage**

(30) Priorität: 30.07.2005 DE 102005035821
(71) Anmelder: Klapka, Hans, 71711 Steinheim-Höpfingen (DE)
(72) Erfinder: Klapka, Hans, 71711 Steinheim-Höpfingen (DE)
(74) Vertreter: Fleck, Hermann-Joseph

(57) **Zusammenfassung**

Die Erfindung betrifft eine thermische Solaranlage mit zumindest einem solarthermischen Kollektor, der über einen Solarkreislauf mit einem Primärkreis von einem externen Wärmetauscher verbunden ist, mit einem flüssigen Medium als Wärmeträger, mit einer Solarstation und Regeleinheit zum Betrieb und zur Regelung der thermischen Solaranlage, mit einem Heizkessel zum Erwärmen eines flüssigen Wärmeträgers in einem Heizkreislauf und/oder einem Heizungskreislauf und mit einem Warmwasserspeicher, in dem die Energie des flüssigen Wärmeträgers des Heizkreislaufes über einen internen Wärmetauscher an Brauchwasser abgegeben wird, mit Pumpen zum Transport des flüssigen Mediums in dem Solarkreislauf sowie dem flüssigen Wärmeträger in dem Heizkreislauf und/oder dem Heizungskreislauf, wobei ein Sekundärkreis des externen Wärmetauschers in den Heizkreislauf eingebunden und von dem flüssigen Wärmeträger des Heizkreislaufs durchflossen ist. Der Wärmeträger des Heizkreislaufs kann so konventionell über den Heizkessel oder über den externen Wärmetauscher solar erwärmt werden und diese Energie an das Brauchwasser oder in dem Heizungskreislauf abgeben.

## Beschreibung

Die Erfindung betrifft eine thermische Solaranlage mit zumindest einem solarthermischen Kollektor, der über einen Solarkreislauf mit einem Primärkreis von einem externen Wärmetauscher verbunden ist mit einem flüssigen Medium als Wärmeträger, mit einer Solarstation und Regeleinheit zum Betrieb und zur Regelung der thermischen Solaranlage, mit einem Heizkessel zum Erwärmen eines flüssigen Wärmeträgers in einem Heizkreislauf und/oder einem Heizungskreislauf und mit einem Warmwasserspeicher, in dem die Energie des flüssigen Wärmeträgers des Heizkreislaufes über einen internen Wärmetauscher an Brauchwasser abgegeben wird, mit Pumpen zum Transport des flüssigen Mediums in dem Solarkreislauf sowie dem flüssigen Wärmeträger in dem Heizkreislauf und/oder dem Heizungskreislauf.

Bei thermischen Solaranlagen im Neubau ist im Allgemeinen ein bivalenter Warmwasserspeicher mit zwei internen Wärmetauschern vorgesehen. Der Solarkreislauf wird dabei an einen der beiden internen Wärmetauscher angeschlossen und gibt dort die in dem solarthermischen Kollektor aufgenommene Wärmeenergie an das Brauchwasser ab. Der zweite interne Wärmetauscher ist mit dem Heizkreislauf verbunden, dessen Wärmeträger, im Allgemeinen Wasser, in einem Heizkessel konventionell aufgeheizt wird und erwärmt so ebenfalls das Brauchwasser. Abhängig von der Sonneneinstrahlung und dem Brauchwasserbedarf kann das Brauchwasser in verschiedenen Betriebsarten alleine von der in dem Solarkollektor aufgenommenen Energie, alleine über den Heizkessel oder in einem Mischbetrieb durch beide gleichzeitig aufgewärmt werden.

Bei einer Nachrüstung einer thermischen Solaranlage ist jedoch zumeist in der bestehenden Anlage zur Brauchwassererwärmung kein bivalenter Warmwasserspeicher installiert, sondem ein monovalenter Warmwasserspeicher mit nur einem Wärmetauscher, über den die Energie von einem Heizkessel über einen Heizkreislauf an das Brauchwasser abgegeben wird.

Um die bestehenden Komponenten bei einer Nachrüstung einer thermischen Solaranlage weiter verwenden zu können sind verschiedene Konzepte bekannt. Im einfachsten Fall kann der solarthermische Kollektor direkt in den Heizkreislauf zwischen Heizkessel und Warmwasserspeicher eingebunden sein. Dies hat jedoch den Nachteil, dass der solarthermische Kollektor von dem gleichen Wärmeträger wie der Heizkreislauf durchflossen wird, wobei dort als Wärmeträger üblicherweise Wasser eingesetzt ist. Bei niedrigen Außentemperaturen besteht die Gefahr, dass das Wasser in dem solarthermischen Kollektor und den Zuleitungen gefriert, was bis zur Zerstörung des solarthermischen Kollektors führen kann. Der Einsatz solcher Anlagen ist somit hauptsächlich auf frostfreie Länder beschränkt. Um solche Anlagen auch in kalten Regionen einsetzen zu können, muss die Temperatur des Wärmeträgers und somit des solarthermischen Kollektors bei Außentemperaturen unter dem Gefrierpunkt des Wärmeträgers durch den angeschlossenen Heizkessel über den Gefrierpunkt des Wärmeträgers aufgeheizt werden. Letzteres führt zu deutlichen Energieverlusten, insbesondere über den solarthermischen Kollektor.

Bei so genannten Thermosiphon-Anlagen werden die solarthermischen Kollektoren in einem offenen Kreislauf direkt von dem Brauchwasser durchflossen, welches dann aus dem Warmwasserspeicher entnommen werden kann. Auch hier werden die solarthermischen Kollektoren von Wasser durchflossen mit den beschriebenen Nachteilen bei niedrigen Temperaturen.

Eine Reihe weiterer bekannter Konzepte zur Integration einer thermischen Solaranlage in eine bestehende Anlage zur Brauchwassererwärmung sind in der Ausgabe 10/2001 der Zeitschrift "Heizungsjournal" beschrieben. Dort ist unter anderem vorgeschlagen, die bestehende Anlage um einen externen Plattenwärmetauscher zur Einspeisung der Solarwärme zu erweitern. Dabei wird der Plattenwärmetauscher ausgangsseitig an den Zirkulationsanschluss und eingangsseitig an den Kaltwasseranschluss des vorhandenen Warmwasserspeichers installiert, während der Heizkreislauf mit dem internen Wärmetauscher des monovalenten Warmwasserspeichers verbunden bleibt. Nachteilig bei dieser Anordnung ist, dass die Solaranlage auf einem erhöhten Temperaturniveau arbeitet, da der konventionelle Heizkessel den Warmwasserspeicher vollständig auf die Solltemperatur erwärmt. Dies kann nur verhindert werden, indem die konventionelle Nachheizung an Tagen großer solarer Einstrahlung abgeschaltet wird, was jedoch einen deutlichen Komfortverlust beim Betrieb der Anlage bedeutet.

Es ist Aufgabe der Erfindung, eine thermische Solaranlage bereit zu stellen, welche eine einfache und kostengünstige Nachrüstung in eine bestehende Anlage zur Warmwasserbereitung ermöglicht.

Die Aufgabe der Erfindung wird dadurch gelöst, dass ein Sekundärkreis des externen Wärmetauschers in den Heizkreislauf eingebunden und von dem flüssigen Wärmeträger des Heizkreislaufs durchflossen ist. Die in dem solarthermischen Kollektor in den flüssigen Wärmeträger des Solarkreislaufes eingespeicherte Wärmeenergie kann so in dem externen Wärmetauscher von dessen Primärkreis auf den Wärmeträger des Heizkreislaufes im Sekundärkreis übertragen werden. Die Energie wird dann vom Wärmeträger des Heizkreislaufes über den internen Wärmetauscher des Warmwasserspeichers an das Brauchwasser abgegeben. Bei einer Nachinstallation einer thermischen Solaranlage können somit weitestgehend alle vorhandenen Komponenten einer bestehenden Anlage zur Warmwasserbereitung weiter verwendet werden. Da der externe Wärmetauscher lediglich in den Heizkreislauf der bestehenden Anlage eingebunden werden muss, ist der Installationsaufwand sehr gering.

Bevorzugt ist der Sekundärkreislauf des externen Wärmetauschers in den Vorlauf des Heizkreislaufs eingebunden ist. Der Vorlauf des Heizkreislaufs ist in Fließrichtung des Wärmeträgers direkt mit dem Wärmetauscher des Warmwasserspeichers verbunden, so dass die von dem Solarkreislauf übertragene Energie direkt und somit mit geringsten möglichen Verlusten zu dem Warmwasserspeicher geleitet und dort an das Brauchwasser übertragen wird.

Der externe Wärmetauscher und somit die thermische Solaranlage lässt sich in Anlagen integrieren, bei denen der Heizkessel und der Warmwasserspeicher separate Geräte sind oder in einem Gerät integriert sind. Dabei ist insbesondere bei Anlagen, in denen Heizkessel und Warmwasserspeicher getrennt vorliegen, eine einfache Installation des externen Wärmetauschers in das offen liegende Rohleitungsnetz des Heizkreislaufes möglich. Aber auch bei integrierten Anlagen kann durch eine entsprechende Abzweigung in dem Rohrleitungssystem des dann geräteintemen verlaufenden Heizkreislaufs der externe Wärmetauscher ohne großen Aufwand eingebunden werden.

Eine besonders vorteilhafte Ausgestaltung der Erfindung ergibt sich dadurch, dass der Warmwasserspeicher ein monovalenter Warmwasserspeicher mit einem internen Wärmetauscher ist. Dies ist insbesondere bei der Nachrüstung einer solarthermischen Solaranlage in eine bestehende Anlage zur Warmwasserbereitung vorteilhaft, da dort zumeist schon ein monovalenter Warmwasserspeicher vorhanden ist. Zusätzliche Kosten für einen bivalenten Warmwasserspeicher sowie die zum Austausch des Warmwasserspeichers notwendigen Installationskosten können so vermieden werden.

Sind der Solarkreislauf, der Heizkreislauf und die Führung des Brauchwassers getrennt aufgebaut und sind der Solarkreislauf und der Heizkreislauf von gleichen oder von unterschiedlichen flüssigen Medien durchströmt, so können für jeden Kreislauf die entsprechend den jeweiligen Anforderungen am besten geeigneten Medien eingesetzt werden.

Ist das als Wärmeträger verwendete flüssiges Medium in dem Solarkreislauf eine hochsiedende Flüssigkeit mit einem Siedepunkt größer 100°C und/oder eine Flüssigkeit mit einem niedrigen Gefrierpunkt von kleiner 0°C, so kann die thermische Solaranlage bei hohen Betriebstemperaturen im solarthermischen Kollektor über 100°C betrieben werden, wie dies beispielsweise bei Vakuumröhrenkollektoren erreicht werden kann. Ein niedriger Gefrierpunkt erlaubt es hingegen, das flüssige Medium auch bei niedrigen Außentemperaturen in dem Solarkreislauf und dem solarthermischen Kollektor zu belassen.

Dabei kann das als Wärmeträger verwendete flüssige Medium in dem Solarkreislauf ein Gemisch aus Wasser und Propylenglykol oder ein Öl sein. Ein Gemisch aus Wasser und Propylenglykol erfüllt die gültigen Normen, beispielsweise die DIN 4754 T1, nach der die als Wärmeträger in dem Solarkreislauf verwendete Flüssigkeit nicht giftig, ätzend oder reizend sein darf. Ein Gemisch aus circa 60% Wasser und circa 40% Propylenglykol ist dabei frostsicher bis -23°C und hat einen Siedepunkt von 150°C. Ein höherer Propylenglykol-Gehalt führt zu niedrigeren Gefrierpunkten der Flüssigkeit, aber auch zu schlechteren Wärmeträgereigenschaften.

Sind die Pumpen in dem Solarkreislauf und in dem Heizkreislauf von der Solarstation mit Regeleinheit gleichzeitig einschaltbar, so wird im Solarbetrieb sowohl der Wärmeträger durch den Solarkreislauf wie der Wärmeträger durch den Heizkreislauf bewegt. Die in dem solarthermischen Kollektor aufgenommene Energie kann so mit Hilfe der Wärmeträger über den externen Wärmetauscher und den internen Wärmetauscher auf das Brauchwasser übertragen werden. Dadurch, dass beide Pumpen gleichzeitig in Betrieb sind, wird eine lokale Überhitzung des Wärmeträgers des Heizkreislaufs in dem externen Wärmetauscher vermieden. Eine lokale Überhitzung ist dann möglich, wenn die Pumpe des Solarkreislaufs in Betrieb und die Pumpe des Heizkreislaufs aus ist und das flüssige Medium im Solarkreislauf eine höhere Temperatur als die Siedetemperatur des Wärmeträgers im Heizkreislauf aufweist.

Eine einfache Temperaturdifferenz-Regelung der thermischen Solaranlage wird dadurch möglich, dass in dem solarthermischen Kollektor und in dem Warmwasserspeicher jeweils zumindest ein Temperaturfühler zur Bestimmung der Temperatur in dem solarthermischen Kollektor und der Brauchwassertemperatur in dem Warmwasserspeicher und/oder der Temperatur an dem internen Wärmetauscher des Warmwasserspeichers vorgesehen sind, welche über Signalleitungen mit der Solarstation mit Regeleinheit verbunden sind. Dabei kann ein Grenzwert für die notwendige Temperaturdifferenz zwischen den Temperaturfühlern vorgegeben werden, ab der die Solarstation mit Regeleinheit die Pumpen in dem Solarkreislauf und dem Heizkreislauf startet. Sobald die Temperaturdifferenz zwischen dem solarthermischen Kollektor und dem Warmwasserspeicher beziehungsweise dem Wärmetauscher des Warmwasserspeichers den Grenzwert unterschreitet, wird die thermische Solaranlage wieder gestoppt.

Die Erfindung wird im Folgenden anhand eines in den Figuren dargestellten Ausführungsbeispiels näher erläutert. Es zeigen:
- Fig. 1: eine schematische Darstellung einer konventionellen Heizungsanlage
- Fig. 2: eine schematische Darstellung einer thermischen Solaranlage mit in den Heizkreis integriertem extemem Wärmetauscher

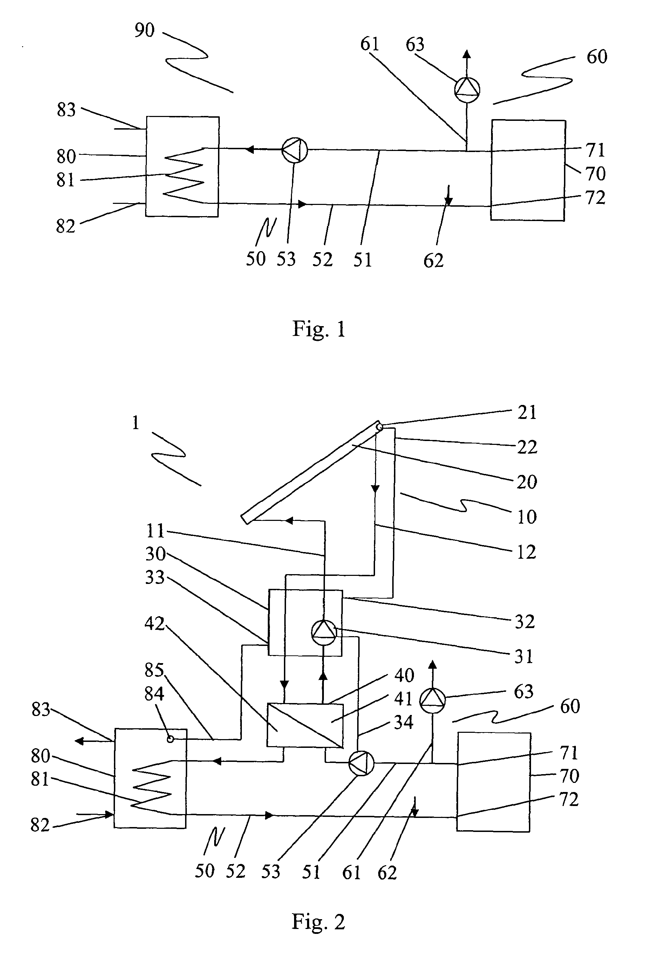

Figur 1 zeigt in einer schematischen Darstellung eine konventionelle Heizungsanlage 90 ohne Solaranlage, wie sie heute häufig zur Brauchwassererwärmung und für Heizzwecke vorzufinden ist. Ein konventionell beheizter Heizkessel 70 ist über seinen Anschluss Vorlauf 71 und seinen Anschluss Rücklauf 72 über einen Heizkreislauf 50 mit Vorlauf 51 und Rücklauf 52 mit einem internen Wärmetauscher 81 eines monovalenten Warmwasserspeichers 80 verbunden. An den Vorlauf 51 und Rücklauf 52 des Heizkreislaufs 50 ist ein Heizungskreislauf 60 mit Vorlauf 61 und Rücklauf 62 angeschlossen. Sowohl in den Heizkreislauf 50 wie in den Heizungskreislauf 60 ist eine Pumpe 53, 63 integriert. An dem Warmwasserspeicher 80 ist ein Kaltwasserzulauf 82 für die Zuführung des Kaltwassers und ein Warmwasseranschluss 83 für die Entnahme des aufgewärmten Brauchwassers vorgesehen.

In Betrieb wird Wasser als Wärmeträger, angetrieben durch die Pumpe 53, beim Durchlauf durch den Heizkessel 70 erwärmt und über den Vorlauf 51 dem internen Wärmetauscher 81 des Warmwasserspeichers 80 zugeführt. Dort gibt es seine gespeicherte Wärmeenergie zum großen Teil an das Brauchwasser in dem Warmwasserspeicher 81 ab und wird über den Rücklauf 52 wieder dem Heizkessel 70 zugeführt.

Der Vorlauf 61 und der Rücklauf 62 des Heizungskreislaufs 60 sind mit nicht dargestellten Raumheizkörpern verbunden. Die Zirkulation des Wassers in dem Heizungskreislauf 60 zu den Heizkörpern wird über die Pumpe 63 aufrecht gehalten.

Bei dem Ausbau einer solchen konventionellen Heizungsanlage 90 zu einer thermischen Solaranlage wird häufig der monovalente Warmwasserspeicher 80 durch einen bivalenten Warmwasserspeicher mit zwei internen Wärmetauschern ausgetauscht und der Solarkreislauf dann an den zweiten Wärmetauscher angeschlossen. Des führt jedoch zu hohen Kosten für die Anschaffung des neuen Warmwasserspeichers und der aufwändigen Installation.

Figur 2 zeigt in schematischer Darstellung einer thermischen Solaranlage 1 mit in den Heizkreis 50 integriertem externem Wärmetauscher 40. Sie beinhaltet die bereits in Figur 1 gezeigten Komponenten Heizkessel 70 mit Anschlüssen für den Vorlauf 71 und den Rücklauf 72, monovalenter Warmwasserspeicher 80 mit internem Wärmetauscher 81, Kaltwasserzulauf 82 und Warmwasseranschluss 83, Heizkreislauf 50 mit Vorlauf 51, Rücklauf 52 und in den Vorlauf 51 integrierter Pumpe 53 sowie einen an den Heizkreislauf 50 angeschlossenen Heizungskreislauf 60 mit Vorlauf 61, Rücklauf 62 und Pumpe 63.

Im Gegensatz zu Figur 1 ist in den Vorlauf 51 des Heizkreislaufs 50 ein externer Wärmetauscher 40 mit seinem Sekundärkreis 42 installiert. Der Primärkreis 41 des externen Wärmetauschers 40 ist mit einer Zuflussleitung 11 und einer Abflussleitung 12 eines Solarkreislaufs 10 verbunden, die wiederum mit einem thermischen Solarkollektor 20 in Verbindung stehen. Eine Solarstation mit Regeleinheit 30 beinhaltet eine Pumpe 31, die in die Zuflussleitung 11 des Solarkreislaufs 10 eingeschaltet ist. Die Pumpe 31 des Solarkreislaufs 10 ist über eine Steuerleitung 34 mit der Pumpe 53 des Heizkreislaufs 50 verbunden. In dem Warmwasserspeicher 80 und dem thermischen Solarkollektor 21 sind jeweils ein Temperaturfühler 84, 21 vorgesehen, welche über Signalleitungen 85, 22 und Anschlüsse Temperaturfühler 32, 33 mit der Solarstation und Regeleinheit 30 in Verbindung stehen.

Der Betrieb der thermischen Solaranlage 1 wird durch die Solarstation mit Regeleinheit 30 geregelt. Stellt die Solarstation mit Regeleinheit 30 eine Temperaturdifferenz größer als ein vorgegebener und abgespeicherter Grenzwert zwischen dem Temperaturfühler 21 des solarthermischen Kollektors 21 und dem Temperaturfühler 84 des Wärmespeichers fest und weist dabei der solarthermische Kollektor 20 die höhere Temperatur auf, so schaltet sie die Pumpe 31 des Solarkreislaufs 10 und über die Steuerleitung 34 gleichzeitig die Pumpe 53 des Heizkreislaufs 50 ein. Im Solarkreislauf 10 zirkuliert jetzt ein als flüssiger Wärmeträger vorgesehenes Wasser/ Propylenglykol-Gemisch von der Zuflussleitung 11 durch den solarthermischen Kollektor 20 und der Auslassleitung 12 zu dem Primärkreis 41 des externen Wärmetauschers 40. Dabei nimmt der flüssige Wärmeträger in dem solarthermischen Kollektor 20 die Sonnenenergie auf, erwärmt sich dadurch und gibt dies Wärmeenergie in dem externen Wärmetauscher 40 zum größten Teil wieder ab.

In dem Heizkreislauf 50 zirkuliert Wasser als flüssiger Wärmeträger. Das Wasser wird dabei durch die Pumpe 53 im Vorlauf 51 des Heizkreislaufs 50 von dem Heizkessel 70 durch den Sekundärkreis 42 des externen Wärmetauschers 40 und von dort zu dem internen Wärmetauscher 81 des Warmwasserspeichers 80 und über den Rücklauf 52 zurück in den Heizkessel 70 befördert. In dem externen Wärmetauscher 40 wird die Wärmeenergie des flüssigen Wärmeträgers des Solarkreislaufs 10 auf das Wasser des Heizkreislaufs 50 übertragen. Über den internen Wärmetauscher 81 des Warmwasserspeichers 80 wird die Wärmeenergie des Wassers des Heizkreiskreislaufs 50 dann an das Brauchwasser weiter gegeben.

Sinkt die Temperaturdifferenz zwischen den Temperaturfühlern 21, 84 unter den vorgegebenen Grenzwert, beispielsweise aufgrund verminderter Sonneneinstrahlung, so schaltet die Solarstation mit Regeleinheit 30 die Pumpen 31, 51 ab, damit keine Wärmeenergie aus dem Heizkreislauf 50 über den externen Wärmetauscher 40 an den jetzt kälteren Solarkreislauf 10 abgegeben wird. Wird jetzt warmes Brauchwasser oder Heizungswasser benötigt, erfolgt die Aufheizung des Wassers des Heizkreislaufs 50 und des Heizungskreislaufs 60 konventionell durch den Heizkessel 70. Dazu wird die Pumpe 53 separat eingeschaltet, die Pumpe 31 bleibt aus.

Neben dem reinen Solarbetrieb bei ausgeschaltem Heizkessel 70 und dem rein konventionellen Betrieb mit ausgeschalteter Pumpe 31 ist ein Mischbetrieb möglich, wenn die Solarenergie den benötigten Energiebedarf nicht vollständig abdecken kann. Dazu sind die Pumpen 31, 53 und der Heizkessel 70 in Betrieb, das Wasser des Heizkreislaufs 50 wird sowohl solar als auch konventionell aufgeheizt.

Über den an den Heizkreislauf 50 angeschlossenen Heizungskreislauf 60 kann im Winterbetrieb ein Teil der solartechnisch gewonnenen Wärmeenergie an die nicht dargestellten Raumheizkörper abgeführt werden. Dazu wird das erwärmte Wasser mittels der Pumpe 63 durch den Heizungskreislauf 60 gepumpt. Durch den gegenüber konventionellen Heizungsanlagen 90 zusätzlich eingebrachten Solarenergieanteil wird die Rücklauftemperatur des Heizungswassers erhöht und der Heizkessel 70 auf höherem Temperaturniveau gehalten, so dass weniger Brennerstarts des Heizkessels 70 notwendig sind.

## Patentansprüche

1. Thermische Solaranlage 1 mit zumindest einem solarthermischen Kollektor 20, der über einen Solarkreislauf 10 mit einem Primärkreis 31 von einem externen Wärmetauscher 40 verbunden ist, mit einem flüssigen Medium als Wärmeträger, mit einer Solarstation und Regeleinheit 30 zum Betrieb und zur Regelung der thermischen Solaranlage 1, mit einem Heizkessel 70 zum Erwärmen eines flüssigen Wärmeträgers in einem Heizkreislauf 50 und/oder einem Heizungskreislauf 60 und mit einem Warmwasserspeicher 80, in dem die Energie des flüssigen Wärmeträgers des Heizkreislaufes 60 über einen internen Wärmetauscher 81 an Brauchwasser abgegeben wird, mit Pumpen 31, 53, 63 zum Transport des flüssigen Mediums in dem Solarkreislauf 10 sowie dem flüssigen Wärmeträger in dem Heizkreislauf 50 und/oder dem Heizungskreislauf 60,
**dadurch gekennzeichnet,**
**dass** ein Sekundärkreis 42 des externen Wärmetauschers 40 in den Heizkreislauf 50 eingebunden und von dem flüssigen Wärmeträger des Heizkreislaufs 50 durchflossen ist.

2. Thermische Solaranlage 1 nach Anspruch 1,
**dadurch gekennzeichnet,**
**dass** der Sekundärkreislauf 42 des externen Wärmetauschers 40 in den Vorlauf des Heizkreislaufs 50 eingebunden ist.

3. Thermische Solaranlage 1 nach einem der Ansprüche 1 oder 2,
**dadurch gekennzeichnet,**
**dass** der Heizkessel 70 und der Warmwasserspeicher 80 separate Geräte sind oder in einem Gerät integriert sind.

4. Thermische Solaranlage 1 nach einem der Ansprüche 1 bis 3,
**dadurch gekennzeichnet,**
**dass** der Warmwasserspeicher 80 ein monovalenter Warmwasserspeicher 80 mit einem internen Wärmetauscher 81 ist.

5. Thermische Solaranlage 1 nach einem der Ansprüche 1 bis 4,
**dadurch gekennzeichnet,**
**dass** der Solarkreislauf 10, der Heizkreislauf 50 und die Führung des Brauchwassers getrennt aufgebaut sind und dass der Solarkreislauf 10 und der Heizkreislauf 50 von gleichen oder von unterschiedlichen flüssigen Medien durchströmt ist.

6. Thermische Solaranlage 1 nach einem der Ansprüche 1 bis 5,
**dadurch gekennzeichnet,**
**dass** das als Wärmeträger verwendete flüssiges Medium in dem Solarkreislauf 10 eine hochsiedende Flüssigkeit mit einem Siedepunkt größer 100°C und/oder eine Flüssigkeit mit einem niedrigen Gefrierpunkt von kleiner 0°C ist.

7. Thermische Solaranlage 1 nach einem der Ansprüche 1 bis 6,
**dadurch gekennzeichnet,**
**dass** das als Wärmeträger verwendete flüssige Medium in dem Solarkreislauf 10 ein Gemisch aus Wasser und Propylenglykol oder ein Öl ist.

8. Thermische Solaranlage 1 nach einem der Ansprüche 1 bis 7,
**dadurch gekennzeichnet,**
**dass** die Pumpen 31, 53 in dem Solarkreislauf 10 und in dem Heizkreislauf 50 von der Solarstation mit Regeleinheit 30 gleichzeitig einschaltbar sind.

9. Thermische Solaranlage 1 nach einem der Ansprüche 1 bis 8,
**dadurch gekennzeichnet,**
**dass** in dem solarthermischen Kollektor 20 und in dem Warmwasserspeicher 80 jeweils zumindest ein Temperaturfühler 21, 84 zur Bestimmung der Temperatur in dem solarthermischen Kollektor 20 und der Brauchwassertemperatur in dem Warmwasserspeicher 80 und/oder der Temperatur an dem internen Wärmetauscher 81 des Warmwasserspeichers 80 vorgesehen sind, welche über Signalleitungen 22, 85 mit der Solarstation mit Regeleinheit 30 verbunden sind.
